# EUROPÄISCHE PATENTSCHRIFT

(11) **EP 1 037 013 B1**
(45) Veröffentlichungstag und Bekanntmachung des Hinweises auf die Patenterteilung: **19.06.2002**
(21) Anmeldenummer: 00105057.4
(22) Anmeldetag: 09.03.2000
(51) Int. Cl.: G01B 11/27

(54) **Vorrichtung zur Präzisionsausrichtung von Wellen, Walzen, Achsen, Spindeln oder Werkzeugmaschinen**
Device for precision alignment of shafts, rollers, spindles or machine tools
Dispositif d'alignement de précision des arbres, rouleaux, broches ou machines-outils

(30) Priorität: 09.03.1999 DE 19910305
(43) Veröffentlichungstag der Anmeldung: 20.09.2000
(73) Patentinhaber: Prüftechnik Dieter Busch AG, 85737 Ismaning (DE)
(72) Erfinder: Busch, Dieter, 85737 Ismaning (DE); Hölzl, Roland, 81369 München (DE); Unger, Andreas, 85748 Garching (DE); Pfister, Florian, 81925 München (DE); Hermann, Michael, 78050 Villingen (DE)
(74) Vertreter: Schwan - Schwan - Schorer

(56) Entgegenhaltungen:
- DE-A- 3 335 336
- GB-A- 2 219 076
- GB-A- 2 237 380
- US-A- 4 698 491

## Beschreibung

### [Stand der Technik]

Vorrichtungen und Verfahren zur Vermessung und zur Präzisionsausrichtung von Wellen, Walzen, Achsen, oder Spindeln, Werkzeugmaschinen und deren Werkzeugen sind seit längerer Zeit bekannt. Eines dieser Verfahren beruht z.B. darauf, unter Verwendung autokollimatorisch arbeitender Vorrichtungen die obengenannten Gegenstände bezüglich einer Referenzebene oder eines weiteren solchen Gegenstandes mit hoher Präzision zu vermessen oder auszurichten.

Weitere Verfahren beruhen auf der in der US-A-4,698,491 angegebenen Lehre.

Den bekannten Verfahren ist gemein, dass die zu ihrer Ausführung benötigten Vorrichtungen mit hochwertigen optischen Komponenten bestückt sind, oder dass bei der Herstellung dieser Vorrichtungen spezielle kostenintensive Fertigungsschritte ausgeführt werden müssen. Dafür kann mit den genannten Vorrichtungen typischerweise eine erstaunliche Vielzahl an Messaufgaben erledigt werden.

### [Aufgabe der Erfindung]

Es ist Aufgabe der Erfindung, eine Messvorrichtung anzugeben, mit welcher Präzisionsmessungen hinsichtlich der Ausrichtung zweier Gegenstände durchführbar sind, wobei diese Gegenstände in fluchtender Weise zueinander angeordnet sind, d.h. parallel zueinander stehende Symmetrieachsen oder -linien aufweisen. Die Gegenstände sind dabei zumeist voneinander beabstandet, d.h. sie weisen einen lichten Zwischenraum nicht allzukleinen Ausmasses auf. Es ist Aufgabe der Erfindung, unter Berücksichtigung dieser speziellen Randbedingung eine Messanordnung anzugeben, welche insbesondere kostengünstiger erstellt werden kann, als dies bislang möglich war, darüberhinaus eine verbesserte Messgenauigkeit aufweist, und zusätzlich nicht darauf angewiesen ist, eine Messung in mehreren einzelnen Mess-Schritten oder Mess-Phasen abzuarbeiten, sondern Messergebnisse anhand einer einzigen Einstellung bereitzustellen, was als ganz wesentlicher Vorteil angesehen wird. Diese Aufgabe wird gemäss den Ansprüchen 1 bis 10 gelöst.

Insbesondere beruht die Erfindung darauf, dass ein lichtoptischer Sender und ein lichtoptischer Empfänger mit einer optischen Vorrichtung kombiniert werden, die in kombinierter Weise zwei gleichzeitig wirkende reflektierende optische Elemente vorsieht. Dabei dient in dieser innovativen Kombination ein erstes reflektives optisches Element zum Nachweis eines eventuell vorhandenen Winkelversatzes (in Azimut und Elevation) zwischen den beiden genannten Gegenständen, (wie z.B. Wellen, Rohren, Hohlzylindern, oder Achsen, insbesondere Wellen oder Achsen von Werkzeugmaschinen), und ein zweites reflektives optisches Element ist dazu vorgesehen, einen eventuell vorhandenen Parallel- oder Lateralversatz zwischen den beiden genannten Gegenständen nachzuweisen. (Auch der Parallel- oder Lateralversatz ist in zwei zueinander senkrecht stehenden Koordinaten nachweisbar.) Beide reflektiv wirkenden optischen Elemente sind dabei in stabiler Weise fest gegeneinander orientiert und beabstandet. In einer speziellen Ausführungsform der Erfindung kann auf die Verwendung von Linsen verzichtet werden. Die Erfindung beruht weiterhin darauf, dass als lichtempfindlicher flächiger Detektor ein zweidimensional auslesbares, pixelorientiertes CCD- oder CMOS-Array vorgesehen wird, welches von Haus aus hervorragende geometrisch-optische Eigenschaften aufweist. Dessen Fähigkeit, quasi gleichzeitig mehrere Lichtpunkte auf seiner Oberfläche detektieren zu können und gleichzeitig eine Angabe bezüglich derer Intensität zu liefern, wird für eine bevorzugte Ausführungsform der Erfindung in vorteilhafter Weise genutzt.

### [Beispiele]

Die Erfindung wird im folgenden anhand eines in den Figuren gezeigten Beispiels erläutert.

Es zeigt
Fig. 1 eine erste Querschnittsansicht einer erfindungsgemässen Vorrichtung, sowie einen Strahlengang bei perfekt ausgerichteter Maschine oder Gegenständen
Fig. 2 eine zweite Querschnittssansicht, jedoch mit einem ersten Strahlengang bei angular und linear/translatorisch fehlerhaft ausgerichteter Maschine oder Gegenständen
Fig. 3 eine dritte Querschnittsansicht ähnlich Fig. 2, wobei jedoch ein zweiter Strahlengang ausgewiesen ist, ausserhalb des sonst als Retroreflektor wirkenden Tripelprismas
Fig. 4 eine vierte Querschnittsansicht ähnlich Fig. 3, bei der das Tripelprisma durch eine frontseitig teilverspiegelte und rückseitig vollverspiegelte plano-konvexe Linse ersetzt ist.

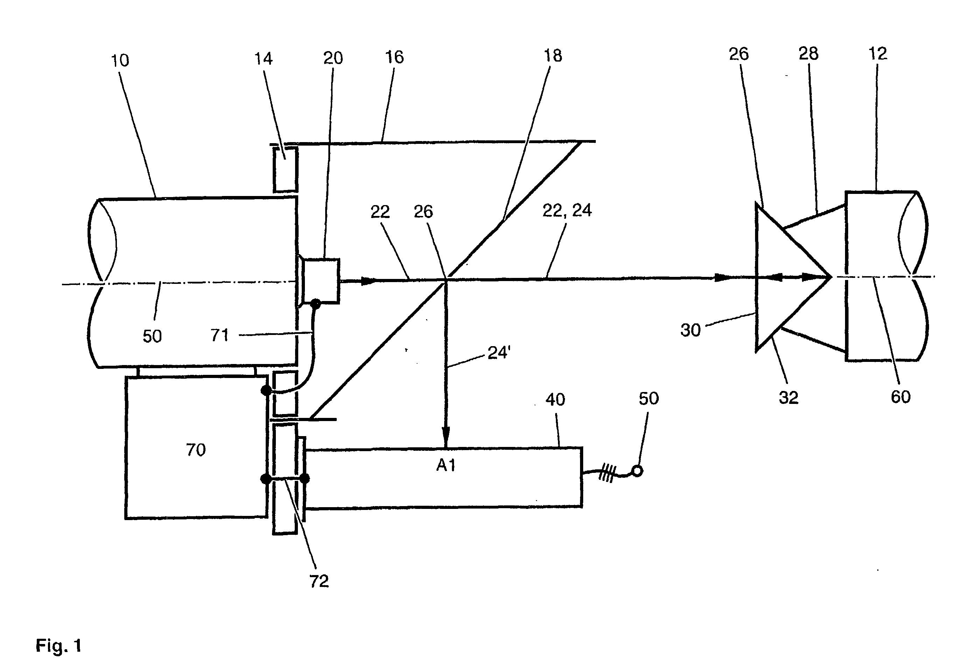

Die in Fig. 1 gezeigte Welle 10 ist typischerweise von kreisrundem Querschnitt und hoher Präzision. Sie wird bevorzugt an vordefinierte Anlageflächen von Maschinen oder Gegenständen angelegt. und kann insbesondere in Spannzangen oder Werkzeugaufnahmen von Werkzeugmaschinen eingespannt werden. Auf dem stirnseitigen Ende der Welle 10 ist eine lichtemittierende Vorrichtung 20, z.B. ein Halbleiterlaser, angebracht, mit welcher ein schmaler und bevorzugt paralleler Lichtstrahl erzeugt werden kann, dessen Haupt-Ausbreitungsrichtung mit der Achse 50 der Welle 10 koinzidiert. Anstelle des Lasers kann auch eine Leuchtdiode samt Fokussierungseinrichtung verwendet werden, oder andere lichtemittierende Einrichtungen, welche nicht-kohärentes, insbesondere mehrfarbiges Licht abgeben. Die lichtemittierende Vorrichtung 20 ist dabei bevorzugt so angebracht, dass das Zentrum ihrer Emissions-Apertur auf der Achse 50 zu liegen kommt. Eine geeignete, an sich bekannte Energieversorgung der Vorrichtung 20 ist dabei durch eine Stromversorgung 70 vorgesehen, welche zum Beispiel eine Batterie enthält, und mittels eines mehrdrähtigen elektrischen Kabels 71 mit der Vorrichtung 20 verbunden ist.

Bezugsziffern 14 und 16 bezeichnen eine Halterung bzw. einen abgeschrägten Tubus, welcher dazu dient, einen teildurchlässigen Spiegel 18 in fester Orientierung und Beabstandung zur lichtemittierenden Vorrichtung 20 zu tragen. Die Teildurchlässigkeit kann z.B. 50% betragen. - Ebenfalls fix zu dieser ist ein flächiger optoelektronischer Sensor oder Element 40 angebracht, welches z.B. mittels einer Verkabelung 72 bestromt wird und einen Signalausgang 50 aufweist, wie er an sich nach dem Stand der Technik bekannt ist und typisch zwei Leiter verwendet.

Ein von der lichtemittierenden Vorrichtung 20 emittierter Lichtstrahl 22 durchquert distal den obengenannten lichten Zwischenraum zwischen Welle 10 und Welle 12 bzw. den an diesen angebrachten messtechnischen Komponenten. In Fig. 1 wird gezeigt, wie dieser Lichtstrahl 22 durch eine teil-spiegelnde plane Frontfläche 30 eines (als Retroreflektor wirkenden) Tripel-Spiegels oder Tripel-Prismas 32 hindurchtritt, welche Frontfläche einen Reflexionsgrad von 5% bis 70% aufweisen kann. Das Tripelprisma (in Fig. 1 bis 3 vereinfacht dargestellt) weist in bekannter Art drei senkrecht aufeinanderstehende spiegelnde Flächen auf, deren eine z.B. mit Bezugsziffer 26 identifiziert ist. In das Tripelprisma 30 eintretende Lichtstrahlen werden mit achsialem Versatz, aber parallelgerichtet reflektiert. Das gezeigte Beispiel zeigt einen parallel und koinzident reflektierten Lichtstrahl 24, im Falle exakt aufeinander ausgerichteter Wellen 10 und 12.

Dieser Lichtstrahl 24 wird am teilverspiegelten planen Reflektor 18 gespiegelt und trifft als Lichtstrahl 24' auf einen Punkt A1 des flächigen optoelektronischen Elements 40, welches im folgenden als Empfänger bezeichnet wird. Der Auftreffpunkt A1 kann nach zwei linearen Koordinaten bestimmt werden, welche die lichtempfindliche Ebene des Empfängers 40 definieren. Der Auftreffpunkt A1 definiert also eine Idealposition, welche bei exakt ausgerichteten Wellen 10 in Erscheinung kommt und mit an sich bekannten elektronischen Mitteln registriert werden kann. Zu diesem Zweck ist es jedoch erforderlich, dass das Tripelprisma 32 mittels geeigneter und stabiler Haltevorrichtungen 28 an der Welle 12 in exakter Weise befestigt ist, so dass die Flächennormale der Oberfläche 30 parallel zur Achse 60 (auch Seele genannt) der Welle 12 verläuft. Ähnlich wie Welle 10 ist auch Welle 12 bevorzugt von kreisrundem Querschnitt und kann gemäss einer bevorzugten Anwendung der Erfindung in eine Spannzange oder eine Werkzeughalterung einer Werkzeugmaschine eingespannt werden, was hier nicht näher gezeigt ist. - Wie in Fig. 1 gezeigt, durchstösst die Achse 60 die Spitze des Tripelprismas 32. In einer abgewandelten Ausführungsform der Erfindung ist ein definierter Versatz dieser Spitze gegenüber der Achse 60 vorgesehen, welche Achse jedoch weiterhin senkrecht zur Oberfläche 30 orientiert sein soll. Der Grund für diese asymmetrische Anordnung wird anhand der folgenden Erörterungen ersichtlich.

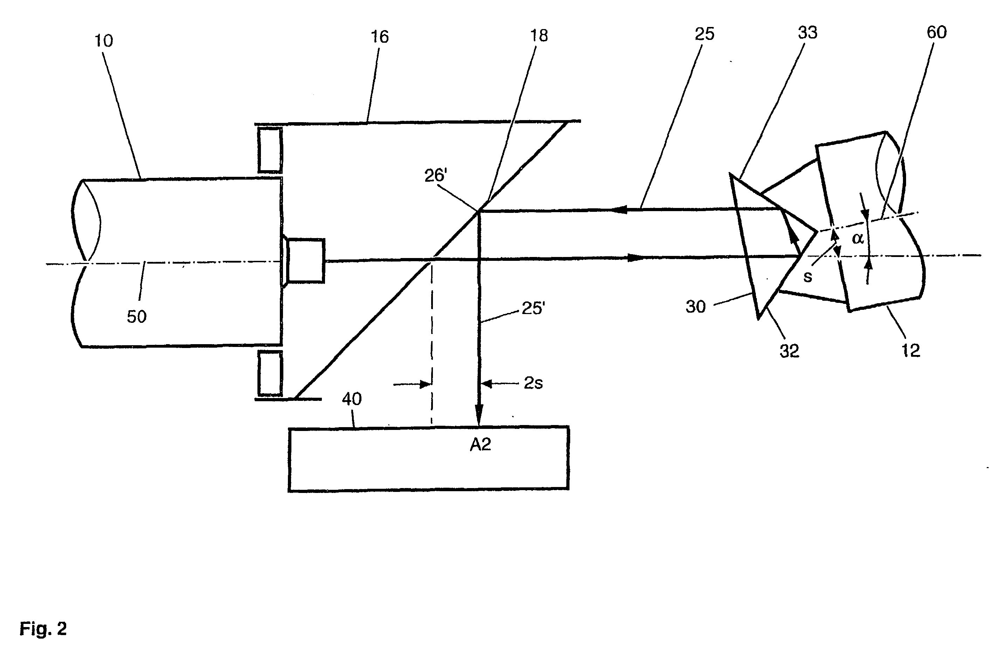

In Fig. 2 wird ein Teil der Verhältnisse gezeigt, die bei einer gegenüber Welle 10 angular (Winkel alpha) und lateral (Verschiebung "s") versetzten Welle 12 auftreten, nämlich der Strahlengang eines emittierten Lichtstrahles 30, welcher an den vollverspiegelten reflektierenden Seitenflächen (z.B. 33) des Tripelspiegels 32 mehrfach reflektiert wird und dieses dann unter parallelem Versatz als Lichtstrahl 25 verlässt. (Fig. 2 ist aus Gründen der Verdeutlichung winkelmässig stark überhöht gezeichnet). Lichtstrahl 25 wird in Punkt 26' durch den teilverspiegelten ebenen Reflektor 18 in Richtung des Empfängers 40 abgelenkt und trifft dort in Punkt A2 auf. Wie gezeichnet, ist dieser mit einem Mass 2s in Richtung des emittierten Lichtstrahls 30 vom Auftreffpunkt A1 beabstandet. Wie man erkennt, spielt für den in Fig. 2 gezeigten Strahlengang der angulare Versatz der Welle 12 zunächst keine Rolle, nur der laterale Versatz "s" führt zu einer Verlagerung des von den genannten reflektierenden Flächen reflektierenden Strahles 25.

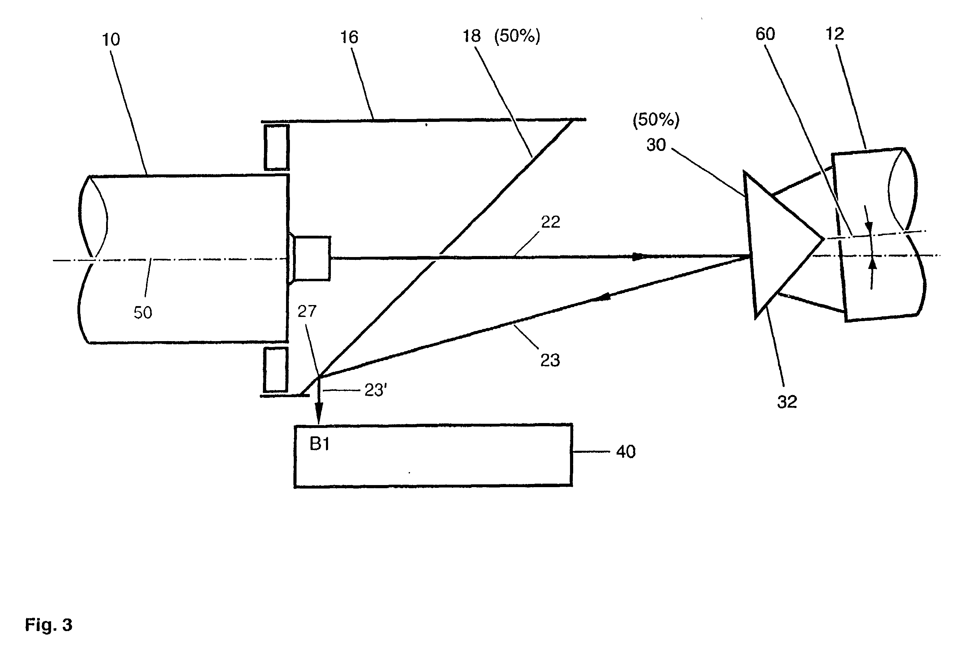

Wie in Fig. 3 gezeigt, ist entscheidendes Merkmal der Erfindung die gleichzeitige Verwendung eines zusätzlichen Reflektors, nämlich in Form der teilspiegelnden Frontfläche 30 des Tripelprismas 32. Dadurch wird ein vorgegebener Anteil, der z.B. 50% der Intensität des Strahles 22 betragen kann, direkt als Strahl 23 auf den Reflektor 18 zurückgeworfen, wo er auf Punkt 27 auftrifft und von dort als Strahl 23' zum Auftreffpunkt B1 auf dem Empfänger 40 reflektiert wird. Bei der genannten 50% Verspiegelung der Fläche 30 ist Strahl 23 daher deutlich intensiver als die Strahlen 24 und 25, welche einem zusätzlichen Abschwächungsvorgang unterworfen werden, aufgrund eines zweimaligen Durchtritts durch die Fläche 30. Damit unterscheidet sich der an Punkt B1 zu registrierende Lichtpunkt deutlich von denen, die bei A2 zu registrieren sind. Da es vorteilhaft ist, die Punkte A2 und B1 in jedem Falle voneinander unterscheiden zu können, was im Falle des Punktes A1 (Fig. 1) nicht der Fall ist, ist es wie bereits erwähnt von Vorteil, das Tripelprisma 32 mit axialem Versatz gegenüber der Achse 60 zu montieren. Auf diese Weise gelingt eine Unterscheidung derjenigen Strahlen, welche von einem ersten reflektierenden Element beeinflusst wurden, von denjenigen Strahlen, welche von einem zweiten reflektierenden optischen Element beeinflusst wurden. Von Bedeutung ist dabei folgendes: Die Richtung der in Fig. 3 gezeigten, durch Fläche 30 gespiegelten Strahlen, ist praktisch nur davon abhängig, welcher angularer Versatz zwischen Achsen 50 und 60 (gemessen nach zwei Koordinaten, i.e. Azimut und Elevation) vorhanden ist. Ein lateraler Versatz von Achse 60 relativ zu Achse 50 hat auf den Strahlengang für Strahl 23 praktisch keinen Einfluss mehr und kann gegebenenfalls mittels einer Korrekturrechnung berücksichtigt werden. Dadurch ist es möglich, mittels der beiden Koordinaten des Punktes B1 auf der lichtempfindlichen Ebene des Empfängers 40 auf die Winkelkoordinaten des angularen Versatzes zwischen den Wellen 50 und 60 zu schliessen.

Eine dem Empfänger nachgeschaltete Elektronik muss daher nur herausfinden, durch welche Koordinaten der Punkt B1 und durch welche Koordinaten der Punkt A2 beispielsweise definiert ist. Anhand dieser Angaben kann in weiteren Rechnungsschritten, die durch einen zugehörigen Computer (nicht gezeigt) ausgeführt werden, ein eventuell vorhandener Fehlversatz zwischen den Wellen 10 und 12 bestimmt werden. Anhand solcher Resultate kann sogleich, d.h. ohne weitere Drehung der Wellen oder Anfahren zusätzlicher Messpositionen, eine Korrekturmassnahme durchgeführt werden, welche zum Ziel hat, die Achsen 50 und 60 koinzident zu machen.

Soll die Genauigkeit der Analyse hinsichtlich eines geringfügigen Fehlversatzes gesteigert werden, so ist es jedoch auch möglich, einen Satz Messergebnisse zu erhalten und entsprechend auszuwerten, indem für verschiedene Drehlagen der Welle 10 jeweils ein zugehöriges Messergebnis bestimmt wird. Anstelle eines einzelnen Punktes A2 oder B1 werden somit Linien definiert, deren kennzeichnenden Parameter (z.B. Schwerpunkt, Mittelpunkt, Streuungen usw.) dazu herangezogen werden, Idealwerte für die genannten Punkte zu errechnen, welche dann einem weiteren Rechnungsgang zugeführt werden, so dass verfeinerte Messwerte für allfällige Korrekturvorhaben an den Wellen zur Verfügung stehen.

In vergleichbarer Weise kann ein verbessertes Ergebnis dadurch bereitgestellt werden, dass bei festgehaltener Welle 10 nur die Welle 12, samt montierten reflektierenden Elementen, gedreht wird und für eine gewisse Anzahl an Drehlagen ebenfalls einzelne Messwerte bestimmt werden.

In ebenfalls vergleichbarer Weise kann ein verbessertes Ergebnis der Messung dadurch bereitgestellt werden, dass Wellen 10 und 12 synchron gedreht werden, und für eine Anzahl an Drehlagen die Positionen der Auftreffpunkte A2, B1 bestimmt, registriert und ausgewertet werden.

In einer weiteren Ausgestaltung der Erfindung können anstelle der ebenen reflektierenden Flächen des Tripelspiegels solche von gekrümmter, insbesondere sphärischer Form vorgesehen sein, was jedoch die Analyse von identifizierten Auftreffpunkten A2, B1 deutlich schwieriger und aufwendiger macht. Zum Beispiel kann das Tripelprisma 32 durch eine teil- und vollverspiegelte plankonvexe Linse ersetzt werden, welche viel kostengünstiger hergestellt werden kann als das Tripelprisma.

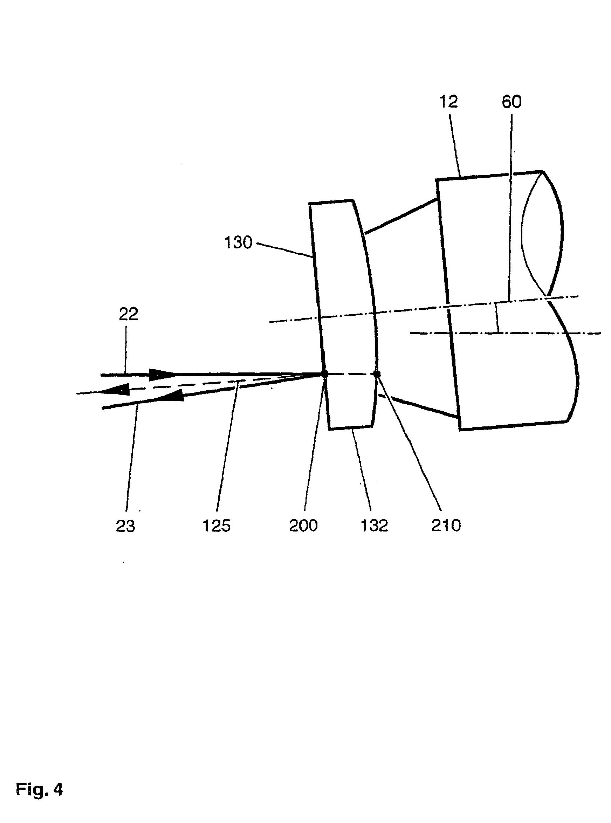

Dies wird in Fig. 4 dargestellt. Auf die Welle 12 ist die frontseitig teilverspiegelte und rückseitig vollverspiegelte plano-konvexe Linse angebracht. Die teilspiegelnde Schicht 130 ist zum Beispiel ca. 40 % reflektierend. Der Hauptanteil des dort reflektierten Lichtes liegt im grünen Spektralbereich. Ein auftreffender z.B. grünes und gelbes Licht enthaltender Lichtstrahl 22 wird im Punkt 200 anteilig, z.B. mit im wesentlichen grüner Farbe, als Strahl 23 reflektiert, nach Massgabe der winkelmässigen Orientierung der Welle 12. Das nicht reflektierte Licht gelangt bis zum Auftreffpunkt 210, von wo es als Lichtstrahl 125 mit den entsprechenden verbleibenden spektralen Komponenten reflektiert wird, um in der Nähe der Teilverspiegelungs-Schicht 130 aus der Linse wieder auszutreten. Die restlichen Gegebenheiten entsprechen denen der Fig. 3.

## Patentansprüche

1. Vorrichtung zum Ausrichten von Wellen, Walzen, Spindeln oder anderen Gegenständen zueinander, mit einer an einem ersten Zylinder (10) oder Prisma an dessen stirnseitigem Ende vorzugsweise zentriert angebrachten Einrichtung (20) zur Erzeugung eines Lichtstrahls (22), einem einzigen flächigen lichtempfindlichen Element (40), welches geeignet ist, Lichtpunkte (A1, A2, B1), welche auf dieses abgebildet werden, nach zwei linearen Koordinaten und nach Intensität zu vermessen, und welches in Bezug zur genannten Einrichtung zur Erzeugung eines Lichtstrahles fest beabstandet ist, mit einem ersten (30; 130) und einem zweiten (26, 33) reflektierenden optischen Element, welche Elemente an einem zweiten Zylinder (12) oder Prisma angebracht sind, wobei der zweite Zylinder distal von dem ersten Zylinder oder Prisma beabstandet ist, und wobei die zwei reflektierenden optischen Elemente eine feste räumliche Zuordnung zueinander und zum zweiten Zylinder oder Prisma aufweisen, und wobei das erste reflektierende optische Element nach Maßgabe eines Winkelversatzes (α) zwischen dem genannten ersten und zweiten Zylinder oder Prisma einen ersten Teil (23) eines von der Einrichtung zur Erzeugung eines Lichtstrahles generierten Lichtstrahls auf das flächige lichtempfindliche Element reflektiert und einen zweiten Teil (25) des Lichtstrahls auf das zweite reflektierende optische Element durchlässt, und wobei das zweite reflektierende optische Element nach Maßgabe eines Lateralversatzes (s) zwischen dem genannten ersten und zweiten Zylinder oder Prisma mindestens einen Teil des zweiten Teils des Lichtstrahls auf das flächige lichtempfindliche Element reflektiert.

2. Vorrichtung nach Anspruch 1, **dadurch gekennzeichnet, dass** das erste reflektierende optische Element von einer planen teilspiegelnden Fläche (30, 130) gebildet wird.

3. Vorrichtung nach Anspruch 2, **dadurch gekennzeichnet, dass** das erste reflektierende optische Element von der teilspiegelnden Frontfläche (30) eines Tripelprismas (32) gebildet wird und das zweite reflektierende optische Element von den Seitenflächen (26, 33) des Tripelprismas gebildet wird.

4. Vorrichtung nach Anspruch 3, **dadurch gekennzeichnet, dass** der Reflexionsgrad der Frontfläche (30) zwischen 5% und 70% liegt.

5. Vorrichtung nach Anspruch 3 oder 4, **dadurch gekennzeichnet, dass** die Seitenflächen (26, 33) zueinander rechtwinklig stehen.

6. Vorrichtung nach Anspruch 3 bis 5, **dadurch gekennzeichnet, dass** die Spitze des Tripelprismas (32) gegenüber der Längsachse (60) des zweiten Zylinders (12) oder Prismas seitlich versetzt ist.

7. Vorrichtung nach Anspruch 2, **dadurch gekennzeichnet, dass** das erste reflektierende optische Element von der teilspiegelnden planen Frontfläche (130) einer planokonvexen Linse (132) gebildet wird und das zweite reflektierende optische Element von der konvexen Rückfläche der Linse gebildet wird.

8. Vorrichtung nach einem der Ansprüche 3 bis 7, **dadurch gekennzeichnet, dass** die teilspiegelnde Frontfläche (30, 130) senkrecht zur Längsachse (60) des zweiten Zylinders (12) oder Prismas steht.

9. Vorrichtung nach einem der vorhergehenden Ansprüche, **dadurch gekennzeichnet, dass** zwischen der Einrichtung (20) zur Erzeugung eines Lichtstrahls (22) und dem ersten reflektierenden optischen Element (30, 130) ein teildurchlässiger Spiegel (18) angeordnet ist, welcher den von dem ersten (30, 130) bzw. zweiten (26, 33) reflektierenden optischen Element reflektierten ersten (23) bzw. zweiten Teil (25) des Lichtstrahls auf das lichtempfindliche Element (40) reflektiert.

10. Vorrichtung nach einem der vorhergehenden Ansprüche, **dadurch gekennzeichnet, dass** das flächige lichtempfindlichen Element (40) als zweidimensional auslesbares, pixelorientiertes CCD- oder CMOS-Array ausgebildet ist.

## Claims

1. Device for aligning shafts, rollers, spindles or other objects in relation to one another, with a means (20) for generating a light beam (22), attached preferably in a centred manner to a first cylinder (10) or prism, on the extreme end of the latter, a single sheet-like light-sensitive element (40), which is suitable for measuring points of light (A1, A2, B1) projected onto it on the basis of two linear coordinates and on the basis of intensity, and which is at a fixed distance with respect to the said means for generating a light beam, with a first reflecting optical element (30; 130) and a second reflecting optical element (26, 33), which elements are attached to a second cylinder (12) or prism, the second cylinder being distally at a distance from the first cylinder or prism, and the second reflecting optical element having a fixed spatial assignment in relation to one another and in relation to the second cylinder or prism, and the first reflecting optical element reflecting a first part (23) of a light beam generated by the means for generating a light beam onto the sheet-like light-sensitive element and allowing through a second part (25) of the light beam onto the second reflecting optical element in accordance with an angular offset (α) between the said first and second cylinders or prisms, and the second reflecting optical element reflecting at least some of the second part of the light beam onto the sheet-like light-sensitive element in accordance with a lateral offset (s) between the said first and second cylinders or prisms.

2. Device according to Claim 1, **characterized in that** the first reflecting optical element is formed by a planar partly reflecting face (30, 130).

3. Device according to Claim 2, **characterized in that** the first reflecting optical element is formed by the partly reflecting front face (30) of a triple prism (32) and the second reflecting optical element is formed by the side faces (26, 33) of the triple prism.

4. Device according to Claim 3, **characterized in that** the reflectance of the front face (30) lies between 5% and 70%.

5. Device according to Claim 3 or 4, **characterized in that** the side faces (26, 33) are at right angles to one another.

6. Device according to Claims 3 to 5, **characterized in that** the tip of the triple prism (32) is laterally offset with respect to the longitudinal axis (60) of the second cylinder (12) or prism.

7. Device according to Claim 2, **characterized in that** the first reflecting optical element is formed by the partly reflecting planar front face (130) of a plano-convex lens (132) and the second reflecting optical element is formed by the convex rear face of the lens.

8. Device according to one of Claims 3 to 7,
**characterized in that** the partly reflecting front face (30, 130) is perpendicular to the longitudinal axis (60) of the second cylinder (12) or prism.

9. Device according to one of the preceding claims, **characterized in that** a partly transparent mirror (18) is arranged between the means (20) for generating a light beam (22) and the first reflecting optical element (30, 130) and reflects the first part (23) or second part (25) of the light beam reflected by the first reflecting optical element (30, 130) or second reflecting optical element (26, 33) onto the light-sensitive element (40).

10. Device according to one of the preceding claims, **characterized in that** the sheet-like light-sensitive element (40) is designed as a two-dimensionally readable, pixel-oriented CCD or CMOS array.

## Revendications

1. Mécanisme d'alignement d'arbres, de rouleaux, de broches ou d'autres objets les uns par rapport aux autres, comportant un dispositif (20) de production d'un rayon lumineux (22) monté de préférence de manière centrée à l'avant d'un premier cylindre (10) ou prisme, un élément photosensible (40) plat unique qui est conçu pour mesurer les points lumineux (A1, A2, B1) qui sont formés sur celui-ci d'après deux coordonnées linéaires et d'après l'intensité et qui présente un écart fixe par rapport audit dispositif de production d'un rayon lumineux, muni d'un premier (30 ; 130) et d'un deuxième (26, 33) élément optique réfléchissant, lesquels éléments étant montés sur un deuxième cylindre (12) ou prisme, le deuxième cylindre se trouvant à un écart distal du premier cylindre ou prisme, et les deux éléments optiques réfléchissants présentant une disposition spatiale fixe l'un par rapport à l'autre et par rapport au deuxième cylindre ou prisme, et le premier élément optique réfléchissant réfléchissant une première partie (23) d'un rayon lumineux produit par le dispositif de production d'un rayon lumineux sur l'élément photosensible plat d'après la valeur d'un décalage angulaire (•) entre lesdits premier et deuxième cylindres ou prismes et laissant passer une deuxième partie (25) du rayon lumineux sur le deuxième élément optique réfléchissant, et le deuxième élément optique réfléchissant réfléchissant au moins une partie de la deuxième partie du rayon lumineux sur l'élément photosensible plat d'après la valeur d'un décalage latéral (s) entre lesdits premier et deuxième cylindres ou prismes.

2. Mécanisme selon la revendication 1, **caractérisé en ce que** le premier élément optique réfléchissant est formé par une surface plane partiellement réfléchissante (30, 130).

3. Mécanisme selon la revendication 2, **caractérisé en ce que** le premier élément optique réfléchissant est formé par la face avant partiellement réfléchissante (30) d'un prisme partiel (32) et le deuxième élément optique réfléchissant est formé par les surfaces latérales (26, 33) du prisme partiel.

4. Mécanisme selon la revendication 3, **caractérisé en ce que** le degré de réflexion de la face avant (30) est compris entre 5% et 70%.

5. Mécanisme selon la revendication 3 ou 4, **caractérisé en ce que** les surfaces latérales (26, 33) sont perpendiculaires l'une à l'autre.

6. Mécanisme selon les revendications 3 à 5, **caractérisé en ce que** la pointe du prisme partiel (32) est décalée latéralement par rapport à l'axe longitudinal (60) du deuxième cylindre (12) ou prisme.

7. Mécanisme selon la revendication 2, **caractérisé en ce que** le premier élément optique réfléchissant est formé par la face avant plane partiellement réfléchissante (130) d'une lentille plano-convexe (132) et le deuxième élément optique réfléchissant est formé par les faces arrières convexes de la lentille.

8. Mécanisme selon l'une des revendications 3 à 7, **caractérisé en ce que** la face avant partiellement réfléchissante (30, 130) est perpendiculaire à l'axe longitudinal (60) du deuxième cylindre (12) ou prisme.

9. Mécanisme selon l'une des revendications précédentes, **caractérisé en ce qu'**entre le dispositif (22) de production d'un rayon lumineux (22) et le premier élément optique réfléchissant (30, 130) est disposé un miroir partiellement transparent (18) qui réfléchit la première (23) ou deuxième partie (25) du rayon lumineux en provenance du premier (30, 130) ou du deuxième (26, 33) élément optique réfléchissant sur l'élément photosensible (40).

10. Mécanisme selon l'une des revendications précédentes, **caractérisé en ce que** l'élément photosensible plat (40) est réalisé sous la forme d'un réseau CCD ou CMOS lisible à orientation de pixels.
